# EUROPÄISCHE PATENTSCHRIFT

(11) **EP 3 376 118 B1**
(45) Veröffentlichungstag und Bekanntmachung des Hinweises auf die Patenterteilung: **09.12.2020**
(21) Anmeldenummer: 18150404.4
(22) Anmeldetag: 05.01.2018
(51) Int. Cl.: F24D 3/10, F24D 19/00, C02F 5/04, C02F 1/42

(54) **HEIZUNGSARMATUR**
HEATING FITTING
ROBINETTERIE DE CHAUFFAGE

(30) Priorität: 14.03.2017 DE 102017105435
(43) Veröffentlichungstag der Anmeldung: 19.09.2018
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A1- 0 723 822
- DE-A1-102015 203 753

## Beschreibung

### Technisches Gebiet

Die Erfindung betrifft eine Wasserarmaturenanordnung, enthaltend
(a) ein Armaturengehäuse mit einem Eingangsanschluss für Rohwasser;
(b) Baugruppen zum Aufbereiten von Wasser für den Heizkreislauf; und
(c) einen Ausgangsanschluss für aufbereitetes Wasser zur festen Installation zwischen einer Rohwasserversorgung und dem Einlassanschluss eines Heizkreislaufs.

Eine Anordnung umfasst eine oder mehrere Armaturen und kann weitere Bauteile umfassen. Die Anordnung ist für die Aufbereitung von Wasser für Heizungsanlagen vorgesehen. Sie setzt sich zusammen aus einer fest installierbaren Wasserarmatur, einem optionalen Systemtrenner und einer temporär anschließbaren Nachbehandlungseinheit. Eine solche Nachbehandlungseinheit ermöglicht den Einsatz an verschiedenen Heizungsanlagen mit entsprechenden Anschlüssen.

Wichtig ist es, dass das Wasser alle Anforderungen einer modernen Heizungsanlage erfüllt. Dazu gehört, dass das Wasser auf verschiedene Weise behandelt wird. Eine Behandlung ist beispielsweise die Enthärtung, Entsalzung, Stabilisierung eines pH-Wertes, Desinfizierung, Bestrahlung, Zugabe von Chemikalien und dergleichen. Ein stabiler pH-Wert kann mit einem Stabilisator eingestellt werden. Dadurch wird Korrosion vermieden. Das Wasser kann je nach Anforderung des Herstellers enthärtet oder entsalzt werden um Kalkablagerungen zu vermeiden. Außerdem ist es wichtig, dass das Wasser gefiltert wird und auf den geforderten pH-Wert stabilisiert wird. Wichtige Aspekte der Wasserbehandlung und -reinigung sind in der VDI Richtlinie VDI 2035 "Vermeidung von Schäden in Warmwasser-Heizungsanlagen" erläutert. Außerdem ist es vorteilhaft, wenn das Wasser mit einem gewünschten Druck verfügbar ist.

### Stand der Technik

Unter der Bezeichnung "Füllkombi" vertreibt die Anmelderin Heizungsarmaturen zum Füllen von Heizkreisläufen. Unter der Bezeichnung "Heizungscenter" vertreibt die Anmelderin Kombinationsarmaturen, bei denen ein Systemtrenner und ein Filter in separaten Gehäusen hintereinander angeordnet sind.

Ein System mit ähnlicher Funktion, wird von der August Brötje GmbH im Internet bei https://www.broetje.de/de/aguaclean.htm unter der Bezeichnung "AguaClean" vertrieben.

EP 1 431 466 A2 offenbart eine als Ganzes montierbare Baugruppe aus Armaturen und Geräten zur Wasserversorgung. Die einzelnen Armaturen sind in eigenen Gehäuseteilen untergebracht.

DE 20 2009 001 957 U1 offenbart eine modulare Anordnung, bei welcher Rohrtrenner, Wasserenthärtungsanordnungen, Filter und Druckminderer als Module hintereinander mit Flanschverbindungen zu einer Anordnung zusammengesetzt werden können. Jedes Modul umfasst ein eigenes Gehäuse. Der Montageaufwand ist vergleichsweise hoch. Die Anordnung ist fest installiert.

EP 2 778 560 B1 offenbart einen fest installierten Heizungsvollautomat mit Filter, Systemtrenner, Druckminderer und einem Drucksensor. Mit dem Heizungsvollautomat wird einer Heizungsanlage beim Füllen und Nachfüllen gefiltertes und behandeltes Wasser mit ausgewähltem Druck zugeführt. Der Heizungsvollautomat wird als Ganzes fest und dauerhaft installiert und sichert neue Heizungsanlagen gegen Überdruck, Korrosion und Verkalkung. Ein System mit ähnlicher Funktion, aber ohne Systemtrenner, wird im Internet auf der Seite https://www.broetje.de/de/aguasave.htm von August Brötje GmbH unter der Bezeichnung "AguaSave" vertrieben.

DE 10 2015 203 753 A1 offenbart eine fest in einer Rohrleitung installierbare Wasserbehandlungseinrichtung mit Verschneidung, Volumenstrommesser und Leitfähigkeitssensor. EP 0723 822 A1 offenbart eine Reinigungsvorrichtung für Wasserleitungen mit einer Pumpe und einem Filter auf einem transportablen Gestell. Wenn eine Bestandsanlage mit einem fest installierten Heizungsvollautomat ausgerüstet wird, wird lediglich das neu zugeführte Wasser aufbereitet. Einmal im Heizungswasser vorhandene Bestandteile, Partikel und Ionen bleiben im Kreislauf und werden auch mit einem Heizungsvollautomaten nicht entfernt. Wenn die Heizungsanlage auf behandeltes und gefiltertes Wasser umgestellt werden soll, ist es daher erforderlich, den Heizkreislauf vollständig zu entleeren. Das ist aufwändig. Die Heizung steht in dieser Zeit nicht zur Verfügung. Die Heizkörper und alle Heizkreise müssen entleert, neu befüllt und entlüftet werden. Sauerstoff dringt in den Heizkreislauf und bewirkt zusätzliche chemische Reaktionen und Korrosion. Eine Entleerung ist daher nachteilig.

Es ist bekannt, temporär eine Behandlungs- und/oder Filteranordnung über einen Bypass in den Heizkreislauf zu installieren. Eine solche Anordnung zur temporären Behandlung und Reinigung wird von perma-trade Wassertechnik GmbH auf der Webseite https://perma-trade.de/produkte/heizungswasser/permaline.html#content_unten unter der Bezeichnung "Permaline" vertrieben. Die Anordnung arbeitet ohne Betriebsunterbrechung. Es muss kein Wasser aus dem Heizkreislauf abgelassen werden. Die Anordnung ist mobil und weist alle erforderlichen Komponenten zur Wasserbehandlung, einschließlich Steuerelektronik, Absperrung, Probennahme, Entsalzung (auch Entmineralisierung genannt), pH-Wert-Stabilisierung und Filter auf. Entsprechend ist die Anordnung voluminös, schwer und teuer. Die Anordnung ist nicht für den dauerhaften Einsatz an der gleichen Heizungsanlage vorgesehen. Die Anordnung ist für Heizungsanlagen vorgesehen, die einen fest installierten Heizungsvollautomaten zur Wasserbehandlung und/oder -reinigung aufweisen.

### Offenbarung der Erfindung

Es ist Aufgabe der Erfindung, die wirtschaftlichere Aufbereitung, insbesondere Behandlung und Reinigung von Heizungswasser zu ermöglichen.

Erfindungsgemäß wird die Aufgabe dadurch gelöst, dass vorgesehen ist:
(d) ein stromaufwärts zu den Baugruppen zur Aufbereitung von Wasser angeordneter Zusatzanschluss zum lösbaren Anschließen einer temporären Nachbehandlungseinheit mit einer Absperrung und einer Pumpe zum Umleiten von Heizungswasser aus dem Heizkreislauf durch die temporäre Nachbehandlungseinheit in die Wasserarmatur, so dass die Aufbereitung des Heizungswassers zumindest teilweise durch die Baugruppen für die Aufbereitung von Wasser in der fest installierbaren Wasserarmaturenanordnung erfolgt; wobei
(e) der Ausgangsanschluss einen gemeinsamen Ausgang bildet, aus dem bei angeschlossener Nachbehandlungseinheit sowohl aufbereitetes Rohwasser als auch aufbereitetes Heizungswasser austritt .

Die temporäre Nachbehandlungseinheit braucht nur diejenigen Baugruppen aufweisen, die in der fest installierten Wasserarmaturenanordnung nicht vorhanden sind. Entsprechend können insbesondere Baugruppen wie eine Dosiereinheit zum Dosieren von Chemikalien, Enthärtungs- oder Entkalkungseinrichtungen, Sensoren, Druckminderer und dergleichen sowohl bei der Be- und Nachfüllung mit Rohwasser als auch bei der Nachbehandlung von Heizungswasser aus Bestandsanlagen genutzt werden. Die Doppelnutzung führt dazu, dass die Nachbehandlungseinheit erheblich kleiner und kostengünstiger ausgeführt werden kann, als bekannte Nachbehandlungseinheiten. Dadurch werden die Kosten reduziert und der Transport und die Herstellung vereinfacht.

Die Wasserarmaturenanordnung kann ein- oder mehrteilig ausgebildet sein. Dabei können die einzelnen Baugruppen und Sensoren, insbesondere die Entsalzungs- oder Entkalkungseinrichtung und die Dosiereinrichtung für Chemikalien, aber auch ein Druckminderer und Systemtrenner als einzelne Armaturen vollständig getrennt vorliegen und mit jeweils einem eigenen Armaturengehäuse zu einer gemeinsamen Wasserarmaturenanordnung zusammengesetzt werden.

Erfindungsgemäß ist vorgesehen, dass die fest installierbare Wasserarmaturenanordnung aufweist:
(i) ein Armaturengehäuse;
(ii) einen an dem Armaturengehäuse vorgesehenen Eingangsanschluss für Rohwasser zum Anschließen an eine Wasserversorgung; und
(iii) einen Ausgang in Form eines Ausgangsanschlusses für aufbereitetes Wasser zum Anschließen an den Heizkreislauf.

Dann ist die Wasserarmaturenanordnung als Ganzes in der Rohrleitung installierbar und erfordert wenig Installationsaufwand. Ein Behälter mit einem Ionentauschermaterial ist dabei aufgrund seines Volumens zwar außerhalb des Armaturengehäuses angeordnet, bildet aber mit seinen Anschlüssen trotzdem einen Teil der Wasserarmaturenanordnung. Die Rohrleitung muss nämlich für die Installation des Behälters mit dem Ionentauscher nicht aufgebrochen werden und es ist keine separate Installation nötig. Vielmehr kann der Behälter mit dem Ionentauschermaterial ähnlich wie andere wartungsbedürftige Baugruppen, von der Wasserarmaturenanordnung gelöst und ausgetauscht, gewartet oder regeneriert werden.

Es ist daher vorzugsweise vorgesehen, dass die fest installierbare Wasserarmaturenanordnung eine Einrichtung zur Entsalzung oder Enthärtung mit einem Ionentauschergranulat in einem separaten Behälter umfasst, wobei der Behälter über einen Behälterkopf und Zuleitungen oder Schläuche mit dem übrigen Teil der fest installierbaren Wasserarmaturenanordnung verbunden ist und der Zusatzanschluss an dem Behälterkopf vorgesehen ist. Dann können die herkömmlichen Wasserarmaturen ohne Modifikation eingesetzt werden. Es werden die gleichen Wasserarmaturen für neue wie für Bestandsanlagen verwendet. Alternativ kann vorgesehen sein, dass der Systemtrenner in das Armaturengehäuse der Wasserarmaturenanordnung integriert ist und der Zusatzanschluss von einem Stutzen des Armaturengehäuses gebildet ist, der stromabwärtig zu dem Systemtrenner und stromaufwärtig zu den Baugruppen zur Aufbereitung von Wasser angeordnet ist. Der Zusatzanschluss kann auch ein eigenes T-Stück oder ein 3-Wege-Ventil in der Rohrleitung zwischen einem separaten Systemtrenner und den übrigen Baugruppen sein.

Ein Systemtrenner ist eine Anordnung aus einem stromaufwärtigen und einem stromabwärtigen Rückflussverhinderer und einem dazwischen angeordneten Ablaufventil. Das Ablaufventil öffnet nach außen, wenn die Druckdifferenz zwischen stromaufwärtigen und stromabwärtigen Flüssigkeitssystem, beispielsweise aufgrund abfallenden Eingangsdrucks abfällt.

Bei einer besonders bevorzugten Ausgestaltung der Erfindung ist vorgesehen, dass eine oder mehrere Baugruppen für die Aufbereitung von Wasser in der Wasserarmaturenanordnung ausgewählt sind aus der Gruppe: Wasserfilter, Druckminderer, Dosiereinrichtung zur Dosierung von Chemikalien, Entsalzungseinrichtungen, Enthärtungseinrichtungen und Bestrahlungseinrichtungen. Es ist aber auch denkbar, das Wasser auf andere Weise aufzubereiten, etwa durch eine physikalische Wasserbehandlung. Eine Entsalzungseinrichtung entfernt alle Ionen aus dem Wasser, sowohl Anionen, als auch Kationen. Bei einer Enthärtungseinrichtung werden lediglich solchen Ionen aus dem Wasser entfernt, die Kalkablagerungen bilden. Solche Ionen sind insbesondere Kalzium- und Magnesiumionen. Diese werden durch Ionenaustausch durch andere Ionen, beispielsweise Natriumionen ersetzt. Es können, müssen aber nicht mehrere Baugruppen in der fest installierten Wasserarmaturenanordnung hinter dem Zusatzanschluss vereinigt sein. Wichtig ist nur, dass der Systemtrenner vor dem Zusatzanschluss angeordnet ist, damit kein Wasser zurück in die Wasserversorgung gelangt.

Ein Druckminderer ist nur bei der Be- und Nachfüllung aus einer Wasserversorgung erforderlich. Er kann sowohl vor, d.h. stromaufwärts, als auch hinter, d.h. stromabwärts zu dem Zusatzanschluss angeordnet sein.

Bei einer besonders bevorzugten Ausgestaltung ist vorgesehen, dass ein Temperaturmessgerät, ein Leitfähigkeitsmessgerät, ein Volumenstrom-Messgerät, ein Druckmessgerät und/oder andere Messgeräte zur Erfassung des Grads der Aufbereitung des Wassers vorgesehen sind. Insbesondere mit dem Leitfähigkeitsmessgerät kann geprüft werden, ob die Entsalzung oder Enthärtung ausreicht. Das Leitfähigkeitsmessgerät liefert ferner Aufschluss darüber, ob der Ionentauscher erschöpft ist. Je nach Lage der Messgeräte können diese wie die Baugruppen zur Aufbereitung des Wassers für beide Wasserarten-Rohwasser und Heizungswasser - verwendet werden.

Vorzugsweise ist vorgesehen, dass die lösbar anschließbare Nachbehandlungseinheit ein Messgerät zur Messung des Volumenstroms durch die lösbar anschließbare Nachbehandlungseinheit aufweist. Das Heizungswasser hat typischerweise eine andere Härte als das Rohwasser. Entsprechend ist ein Ionentauscher bei Heizungswasser bei einem anderen Durchflussvolumen erschöpft als bei Rohwasser. Die Steuerungseinheit, die mit den Signalen der Sensoren beaufschlagt ist und Steuerungssignale für die Baugruppen, Absperrungen etc. erzeugt. verarbeitet den gemessenen Volumenstrom folglich zu einem anderen Wert für den Erschöpfungszeitpunkt des Ionentauschers.

Vorzugsweise weist die lösbar anschließbare Nachbehandlungseinheit einen Wasserfilter auf. Ein Wasserfilter ist zwar nicht zwingend zur Verwirklichung der Erfindung. Er hat aber den Vorteil, dass das Heizungswasser aus der Bestandsanlage auch gefiltert wird. Neben dem Wasserfilter kann die Nachbehandlungseinheit insbesondere eine Wartungsabsperrung, eine Pumpe, einen Volumenstromzähler und ein Drei-Wege-Ventil aufweisen. Das Drei-Wege-Ventil ermöglicht es, das Wasser auf verschiedenen Wegen durch die Wasserarmaturenanordnung zu schicken. Ein Beispiel für solche Wege sind einmal durch eine Vollentsalzungseinrichtung und einmal daran vorbei. Wenn das Ventil von einer Steuerung steuerbar ist, kann die Steuerung nach Maßgabe von Messwerten, etwa der Leitfähigkeit und/oder dem Volumenstrom erfolgen.

Bei einer besonders vorteilhaften Ausgestaltung der Erfindung weist die Wasserarmaturenanordnung eine Ionentauschereinrichtung mit einem Ionentauschergranulat in einem Behälter aufweist, wobei der Behälter lösbar an die übrigen Teile der Wasserarmaturenanordnung anschließbar ist, und der Zusatzanschluss am Behälter vorgesehen ist, der so positioniert ist, dass das Heizungswasser von der lösbaren Nachbehandlungseinheit zunächst durch den Behälter und anschließend in den übrigen Teil der Wasserarmaturenanordnung fließt. Statt in Form von Granulat kann der Ionentauscher auch in anderer Form vorliegen. Der Behälter muss üblicherweise gelegentlich gelöst werden, um den Ionentauscher auszutauschen oder zu regenerieren. Wenn der Zusatzanschluss am Behälter oder Behälterkopf vorgesehen ist, hat dies den Vorteil, dass die übrige Wasserarmaturenanordnung unverändert bleibt. Zudem werden zwei Zuleitungen oder Schläuche weniger gebraucht.

Vorteilhafterweise weist die Wasserarmaturenanordnung eine Entsalzungs- oder Enthärtungseinrichtung auf und eine Verschneideeinrichtung, mit welcher Rohwasser dem in der Entsalzungs- oder Enthärtungseinrichtung behandelten Wasser zuführbar ist. Bestimmte Chemikalien, insbesondere Pufferlösungen, erfordern ein gewisses Maß an Ionen. Wenn das Wasser vollentsalzt ist, liegen diese nicht mehr im ausreichenden Maß vor. Es kann daher sinnvoll sein, nicht-entsalztes Rohwasser in definierter Menge dem vollentsalzten Wasser wieder über eine Verschneidungseinrichtung zuzusetzen.

Bei einer weiteren Ausgestaltung der Erfindung ist ferner eine motorgesteuerte Absperrung stromaufwärts zum Systemtrenner angeordnet, und Mittel zur Erfassung des Drucks in der Heizungsanlage, so dass die Absperrung nach Maßgabe des erfassten Drucks betätigbar ist. Wenn der Druck in der Heizungsanlage abfällt, öffnet die Absperrung automatisch und wird nachgefüllt, bis der gewünschte Druck erreicht ist.

Die Leitfähigkeit ist ein gutes Maß für die Ionenmenge, die im Wasser enthalten ist. Es ist daher vorzugsweise ein Leitfähigkeitssensor in der Strömung stromabwärts zu einer Baugruppe für die Wasserbehandlung vorgesehen, dessen Signale an ein Steuergerät übertragen werden.

Die Anordnung kann eine Steuereinheit zur Steuerung einer oder mehrerer Baugruppen für die Aufbereitung von Wasser für Heizungsanlagen und/oder zur Steuerung einer Absperrung und/oder Anzeige des Erschöpfungsgrads von Wasserbehandlungseinrichtungen aufweisen, wobei die Steuereinheit zusätzlich mit den Signalen einer Nachbehandlungseinheit beaufschlagbar ist. Diese kann insbesondere Kommunikationsmittel zur Kommunikation mit einem Betreiber aufweisen, beispielsweise eine Schnittstelle zur drahtlosen Kommunikation, ein Touchdisplay und/oder Bildschirm und Tastaturen.

Die Erfindung betrifft ferner eine Wasserarmaturenanordnung für eine Anordnung nach einem der vorgehenden Ansprüche

Mit dem motorbetriebenen Absperrhahn, kann ein Heizkreislauf automatisch befüllt werden. Wenn der Druck im Heizkreislauf absinkt, öffnet der Absperrhahn eine Verbindung zur Wasserversorgung und Wasser fließt in den Heizkreislauf.

Ein Filter filtert Partikel aus dem Wasser. Eine Systemtrenneranordnung stellt sicher, dass kein Wasser aus dem Heizkreislauf zurück in die Wasserversorgung fließen kann. Bei einem defekten Rückflussverhinderer und einem Abfall des Eingangsdrucks öffnet ein Ablaufventil und Wasser fließt nach außen ab. Mit einem Druckminderer wird der Fülldruck geregelt. Die Heizungsarmaturen werden gewöhnlich einzeln in der Rohrleitung installiert.

Bei einer besonders bevorzugten Ausgestaltung der Erfindung sind die verwendeten Behälter für Ionentauscher codiert. Beim Installieren werden zunächst die Rahmendaten der Heizungsanlage abgefragt. Aus diesen Rahmendaten wird das Wasservolumen in der Heizungsanlage geschätzt. Zusammen mit dem einmalig zu bestimmenden pH-Wert kann dann eine Empfehlung für die Behältergröße gemacht werden. Codierte Behälter ermöglichen die Auswahl der Flaschengröße und die Steuereinheit überprüft, ob die Flaschengröße zu den gemachten Eingaben passt. Wenn die Behältergröße und damit die Kapazität des Ionentauschers zu gering gewählt wird, erhält der Nutzer einen entsprechenden Hinweis. Ein zu groß gewählter Behälter hingegen ist nicht schädlich.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen insbesondere DIN EN 806-1, VDI 2035 und DIN EN 1717 und den einschlägigen Internetseiten und Publikationen, insbesondere lexikalischer Art, beispielsweise www.Wikipedia.de, www.wissen.de oder www.techniklexikon.net, der Wettbewerber, forschenden Institute, Universitäten und Verbände, beispielsweise Deutscher Verein des Gas- und Wasserfaches e.V. oder Verein Deutscher Ingenieure, dargelegt sind. Insbesondere haben die verwendeten Begriffe nicht die gegenteilige Bedeutung dessen, was der Fachmann den obigen Publikationen entnimmt.

Weiterhin werden hier folgende Bedeutungen für die verwendeten Begriffe zugrunde gelegt:
- Absperrung:: ist jede Art von Einrichtung, welche einen Fluidstrom ganz oder teilweise blockiert. Typische Absperrungen sind Kugelhähne oder Ventile.
- Armatur:: ist ein Bauteil zur Installation in oder an einer Rohrleitung oder anderen Fluidinstallation zum Absperren, Regeln oder Beeinflussen von Stoffströmen. Eine Armatur kann einteilig oder mehrteilig ausgebildet sein und wird an einer Stelle in oder an der Rohrleitung installiert. Armaturen sind beispielsweise und nicht abschließend: Anschlussvorrichtungen, Anschlussarmaturen, Hauptabsperrarmaturen, Wartungsarmaturen, Drosselarmaturen, Entnahmestellen, Entnahmearmaturen, Entleerungsarmaturen, Sicherungsarmaturen, Sicherheitsarmaturen und Stellarmaturen.
- Ausgangsdruck: Druck im Auslass und allen mit dem Auslass direkt verbundenen Bereichen innerhalb eines Gehäuses
- Auslass: ist eine ablaufseitige Öffnung in einem Gehäuse, aus welcher ein Stoffstrom herausfließen kann. Die Öffnung kann insbesondere an eine Rohrleitung oder eine weitere Armatur angeschlossen sein oder frei zur Atmosphäre hin öffnen.
- axial: ist die Richtung der Rotationsachse von ganz oder teilweise rotationssymmetrischen Bauteilen, wie etwas Rohren oder langgestreckten Gehäusen. Bei Bauteilen ohne Rotationssymmetrie ist es die Hauptströmungsrichtung in einem Bauteilabschnitt.
- Bohrung: ist jede Art von Verbindung zweier Hohlräume, sowie Sacklöcher.
- Druck: Kraft pro Flächeneinheit
- Druckminderer: ist eine Armatur zur Einstellung eines ausgewählten Drucks an dahinterliegenden Bauteilen.
- Durchgang: ist eine Verbindung, welche Stoffströme ermöglicht.
- Eingangsdruck: Druck im Einlass und allen direkt mit dem Einlass verbundenen Bereichen innerhalb eines Gehäuses.
- Einlass: ist eine zulaufseitige Öffnung in einem Gehäuse, in welchen ein Stoffstrom hineinfließen kann. Die Öffnung kann insbesondere an eine Rohrleitung oder eine weitere Armatur angeschlossen sein oder frei zur Atmosphäre hin öffnen.
- Filter: ist eine Einrichtung, mit welcher Feststoffe aus einem Fluidstrom zurückgehalten werden.
- Gehäuse: Begrenzung für Stoffe, Bauteile, Instrumente und Messgeräte nach außen. Ein Gehäuse kann einteilig oder aus mehreren verbundenen Gehäuseteilen mehrteilig ausgebildet sein und aus einem oder mehreren Materialien bestehen.
- Griff: nach außen ragendes Bauteil zum manuellen Halten oder Bewegen.
- Kolben: Bauteil, das zusammen mit einem umgebenden Gehäuse einen Hohlraum bildet, dessen Volumen sich durch eine Bewegung des Bauteils verändert.
- Motor: Maschine, die mechanische Arbeit verrichtet, indem sie eine Energieform, z.B. thermische, chemische oder elektrische Energie, in Bewegungsenergie umwandelt.
- radial: senkrecht zu einer axialen Richtung.
- Reed-Kontakt: Kontaktzungen, beispielsweise aus einer Eisen-Nickel-Legierung, in einem abgeschlossenen Hohlraum, die magnetisch betätigt werden.
- Rohr: Hohlkörper aus zylindrischen Abschnitten. Dient üblicherweise als Rohrleitung.
- Rückflussverhinderer: Sicherungsarmatur gegen Rückfließen. Eine Vorrichtung, die dazu bestimmt ist, das Rückfließen eines Stoffstroms, entgegen einer bestimmungsgemäßen Fließrichtung zu verhindern.
- Rückspülen: Durchströmen einer Komponente oder von Filtermaterial in umgekehrter Richtung und Ablassen des Spülmediums nach außen
- Rückspülfilter: Filter, welcher durch Rückspülen gereinigt wird.
- Stutzen: Rand oder Übergangsstück an einer Öffnung.
- Ventil: Bauteil zur Absperrung oder Regelung des Durchflusses von Fluiden.

### Kurze Beschreibung der Zeichnungen

- Fig. 1: zeigt schematisch eine Heizungsanlage mit einer Nachfüllleitung und eine fest installierte Armaturenanordnung, in der Baugruppen zur Aufbereitung von Wasser für den Heizkreislauf der Heizungsanlage vorgesehen sind.
- Fig.2: zeigt die Anordnung aus Figur 1 mit einer Nachbereitungseinheit zur Behandlung von Heizungswasser in bestehenden Heizungsanlagen.
- Fig.3: ist eine perspektivische Darstellung eines fest installierten Heizungsvollautomaten mit einer temporär daran angeschlossenen, mobilen Nachbereitungseinheit.
- Fig.4: ist eine Seitenansicht der Anordnung aus Figur 3, wobei die Nachbereitungseinheit ohne Gehäuse dargestellt ist.
- Fig.5: ist eine perspektivische Ansicht des Heizungsvollautomaten im Detail mit losgelöster Verschneideeinrichtung.
- Fig.6: ist eine Seitenansicht der Verschneideeinrichtung für den Heizungsvollautomaten aus Figur 5.
- Fig. 7: ist ein Querschnitt durch die Verschneideeinrichtung aus Figur 6.
- Fig.8: ist eine perspektivische Darstellung der Anschlussarmatur mit dem zugehörigen Behälter mit Ionentauschergranulat.
- Fig. 9: ist eine Seitenansicht der losgelösten Anschlussarmatur für einen Behälter mit Ionentauschergranulat aus Figur 8.
- Fig. 10: ist ein Querschnitt durch die Anschlussarmatur aus Figur 9.
- Fig.11: ist eine Seitenansicht der Nachbehandlungseinheit aus Figur 1 ohne Gehäuse im Detail.
- Fig. 12: ist ein Querschnitt durch die Nachbehandlungseinheit aus Figur 11.
- Fig. 13: ist ein Querschnitt durch die Nachbehandlungseinheit aus Figur 11 entlang einer Schnittebene C-C, die gegenüber der in Figur 12 gezeigten Schnittebene um einen Winkel von 90° versetzt ist.
- Fig. 14: ist ein Querschnitt durch den Heizungsvollautomaten aus Figur 1 entlang einer vertikalen Schnittebene.
- Fig. 15: ist ein Querschnitt durch den Heizungsvollautomaten aus Figur 14 entlang einer horizontalen Schnittebene.
- Fig. 16: ist ein Querschnitt durch den Heizungsvollautomaten aus Figur 14 entlang einer vertikalen Schnittebene, die um einen Winkel von 90° gegenüber der Schnittebene in Figur 14 versetzt ist.
- Fig. 17: ist eine Explosionsdarstellung des Heizungsvollautomaten aus Figur 14.

### Beschreibung des Ausführungsbeispiels

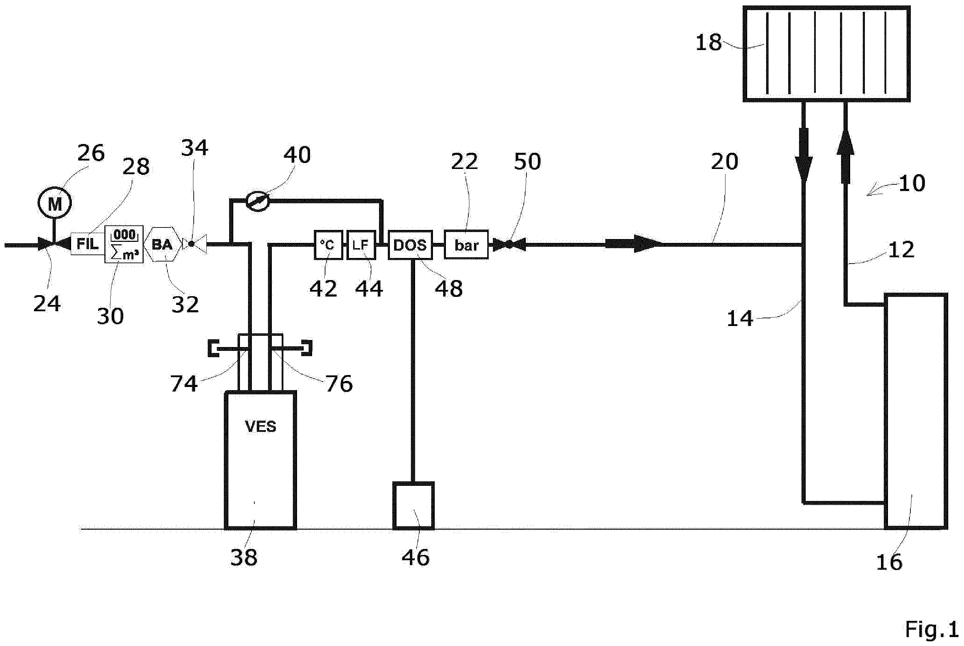

Figur 1 zeigt eine Anordnung zum Be- und Nachfüllen einer allgemein mit 10 bezeichneten Heizungsanlage. Die schematisch dargestellte Heizungsanlage 10 umfasst wenigstens einen Heizkreislauf mit einem Vorlauf 12 und einem Rücklauf 14. Wasser wird in einer Heizung 16 beliebiger Bauart erwärmt. Es fließt dann über den Vorlauf 12 zu Heizkörpern 18, wo es seine Wärme abgibt. Durch den Rücklauf 14 gelangt das Wasser wieder zur Heizung 16. Das Wasser wird ständig umgepumpt. Wenn sich Wasser erwärmt, dehnt es sich aus. Dabei kommt es gelegentlich zu Wasserverlusten, auch wenn ein Ausdehnungsgefäß verwendet wird. Entsprechend muss gelegentlich Wasser nachgefüllt werden um die dadurch entstandenen Druckverluste auszugleichen.

Moderne Heizungsanlagen sollen nicht einfach mit unbehandeltem Rohwasser aus einer Wasserversorgung befüllt werden. Kalk kann zu Kesselsteinbildung führen. Im Wasser gelöster Sauerstoff kann zu Korrosion führen. Der pH-Wert sollte innerhalb eines vorgegebenen Bereichs liegen. Die Anlage erfordert geregelte Druckverhältnisse. Je nach Hersteller und Heizungsanlage sind unterschiedliche Anforderungen zu erfüllen.

Die Aufbereitung von Wasser zum Nachfüllen einer Heizungsanlage 10 erfordert entsprechend verschiedene Baugruppen, die in Figur 1 dargestellt sind. Das Wasser wird über eine Nachfüllleitung 20 in den Rücklauf 14 eingespeist. Es ist natürlich auch möglich, dass Wasser in den Vorlauf 12 einzuspeisen. Die Nachfüllleitung 20 ist mit einer Rohwasserversorgung, beispielsweise der Trinkwasserversorgung eines Wasserversorgers (nicht dargestellt) verbunden.

Im vorliegenden Ausführungsbeispiel sind die Baugruppen in einem Heizungsvollautomat, d.h. in einer Wasserarmaturenanordnung mit einem gemeinsamen Armaturengehäuse vereinigt. Es ist aber auch möglich, einzelne Baugruppen separat zu installieren. Die Baugruppen haben eine gemeinsame, nachstehend beschriebene Steuerung mit einer Kommunikationseinheit, über welche insbesondere auch die Sollwerte für die Wassereigenschaften eingestellt werden können.

Ein stromabwärtiger Drucksensor 22 misst den Druck im Bereich des Heizkreislaufs. Wenn der gemessene Druck unter einen Sollwert abfällt, öffnet ein eingangsseitiger Absperrhahn 24 durch Betätigung eines Motors 26. Stromabwärtig zu dem Absperrhahn 24 ist ein Vorfilter 28 angeordnet, welcher grobe Partikel aus dem Rohwasser entfernt. Dadurch werden die stromabwärtigen Baugruppen vor groben Verunreinigungen im Rohwasser geschützt.

Stromabwärts zum Vorfilter 28 ist ein Volumenstromzähler 30 vorgesehen. Mit dem Volumenstromzähler 30 in Form einer Turbine mit Reedkontakt wird die nachgefüllte Wassermenge bestimmt. Um zu verhindern, dass Heizungswasser zurück in die Rohwasserversorgung fließt, ist es zwingend vorgeschrieben, den Heizkreislauf 12, 14 von der Rohwasserversorgung mit einem Systemtrenner zu trennen. Wenn beispielsweise der Eingangsdruck abfällt, öffnet ein Ablassventil zwischen zwei Rückflussverhinderern und Heizungswasser fließt nach außen ab. Es kann nicht in die Rohwasserversorgung eindringen. Im vorliegenden Ausführungsbeispiel ist ein Systemtrenner 32 hinter dem Volumenstromzähler 30 in die Wasserarmaturenanordnung integriert. Es ist aber auch möglich, den Systemtrenner separat zu installieren.

Ein Druckminderer 34 hinter dem Systemtrenner 32 reguliert den Einlassdruck des Rohwassers auf einen ausgewählten Sollwert. Dadurch wird das System vor Druckspitzen geschützt. Ein Teil des vorgefilterten und druckregulierten Wasser wird durch eine Entsalzungspatrone 36 und einen Behälter 38 mit einem Ionentauschergranulat geleitet. Solange das Granulat nicht erschöpft ist, hat das behandelte Wasser keinerlei Kalzium-, Magnesium- oder andere Ionen, die dem Wasser bei der Entsalzung entzogen wurden. Insbesondere hat das Wasser dann den Härtegrad 0. Der andere Teil des Rohwassers wird an der Entsalzungspatrone 36 und dem Behälter 38 vorbeigeleitet. Das Rohwasser und das entsalzte Wasser werden mit einer Verschneideeinrichtung 40 im gewünschten Verhältnis wieder zusammengeführt. Auf diese Weise erhält das Wasser einen ausgewählten Härtegrad oder Salzgehalt. Nach der Entsalzung sind ein Temperatursensor 42 und ein Leitfähigkeitssensor 44 angeordnet. Die Leitfähigkeit ist ein Maß für die Menge der im Wasser enthaltenen Ionen. Eine steigende Leitfähigkeit bei sonst gleichen Bedingungen ist also ein Indiz dafür, dass das Ionentauschergranulat erschöpft ist. Dann wird die Absperrung 24 geschlossen und der Nutzer erhält einen optischen oder akustischen Hinweis an einem Display oder wird über eine Kommunikationseinheit über die Erschöpfung des Ionentauschergranulats informiert. Anhand der Leitfähigkeit kann ferner das Verschneidungsverhältnis zwischen Rohwasser und entsalztem Wasser eingestellt werden.

Ergänzend oder Anstelle des Leitfähigkeitssensors kann die Erschöpfung der Flasche auch aus dem Volumenstrom am Volumenstromzähler 30 und der Eingangshärte des Rohwassers bestimmt werden. Jede Menge an Ionentauschermaterial hat eine bekannte Kapazität an Ionen, die bis zur Erschöpfung dem Wasser entzogen werden können. Wenn die Kapazität erreicht ist, muss das Ionentauschermaterial ersetzt oder regeneriert werden.

Die Aufbereitung des Wassers für die Heizungsanlage 10 erfordert nicht nur, dass störende Ionen, insbesondere Steinbildende Ionen dem Wasser entzogen werden. Es ist ferner erforderlich, dem Wasser Chemikalien zuzusetzen. Solche Chemikalien sind beispielsweise Phosphate, pH-Stabilisatoren, Inhibitoren und dergleichen. Sie werden entsprechend der Wassermenge aus einem Chemikalienvorrat in einem Dosierbehälter 46 mit einer Dosierpumpe 48 an einer Impfstelle in das Wasser dosiert.

Wichtig ist es, dass die Chemikalien dem Wasser erst hinter dem Ionentauscher 38 zugeführt werden. Der Ionentauscher entfernt alle Ionen aus dem Wasser, einschließlich vorher zugesetzter Chemikalien. Entsprechend würde ein hinter einer Dosierung angeordneter Ionentauscher den Effekt wieder aufheben. Das ist nicht erwünscht. Es ist ferner wichtig, die Chemikalien erst hinter dem Leitfähigkeitsmesser 44 zuzusetzen, denn die Chemikalien bestehen aus Ionen, welche die Leitfähigkeit erhöhen. Dies soll nicht gemessen werden.

Das mit im Filter gereinigte, druckregulierte, enthärtete oder entsalzte, mit Rohwasser verschnittene und mit Chemikalien versetzte, fertig aufbereitete Wasser kann nun dem Heizkreislauf 14 zugeführt werden. Da das Wasser insbesondere auch zum regelmäßigen Nachfüllen aufbereitet werden muss, ist die Wasserarmaturenanordnung fest in der Nachfüllleitung 20 installiert. Lediglich zur Wartung wird eine Wartungsabsperrung 50 und die Absperrung 24 geschlossen. Dann können die Baugruppen ersetzt und/oder gewartet werden. Soweit erforderlich, sind die Baugruppen mit einer Steuerungseinheit verbunden, die auch mit den Signalen der Sensoren und Messgeräte 22, 30, 42, 44 beaufschlagt ist. Über die Steuerungseinheit erfolgt die Kommunikation mit dem Betreiber. An ihr können Einstellungen vorgenommen und geändert werden, sowie Alarmsignale erzeugt werden, wenn die Wasseraufbereitung nicht dem Sollverhalten entspricht, Wartungen fällig sind, Ionentauschergranulat erschöpft ist und/oder die Chemikalien im Dosierbehälter 46 nicht mehr in ausreichendem Maße vorhanden sind.

Die anhand von Figur 1 beschriebene Anordnung zur Wasseraufbereitung ist fest installiert und bei der Erstbefüllung von Heizungsanlagen und für die Nachfüllung von Wasser besonders vorteilhaft. Wenn eine bestehende Heizungsanlage 10 mit einer solchen Anordnung nachgerüstet wird, muss das im Kreislauf 12, 14 zirkulierende Heizungswasser nachbehandelt werden. Diese Nachbehandlung muss nur einmal durchgeführt werden. Es ist also zwar theoretisch möglich, aber weder erforderlich, noch sinnvoll, Nachbehandlungseinrichtungen dauerhaft zu installieren.

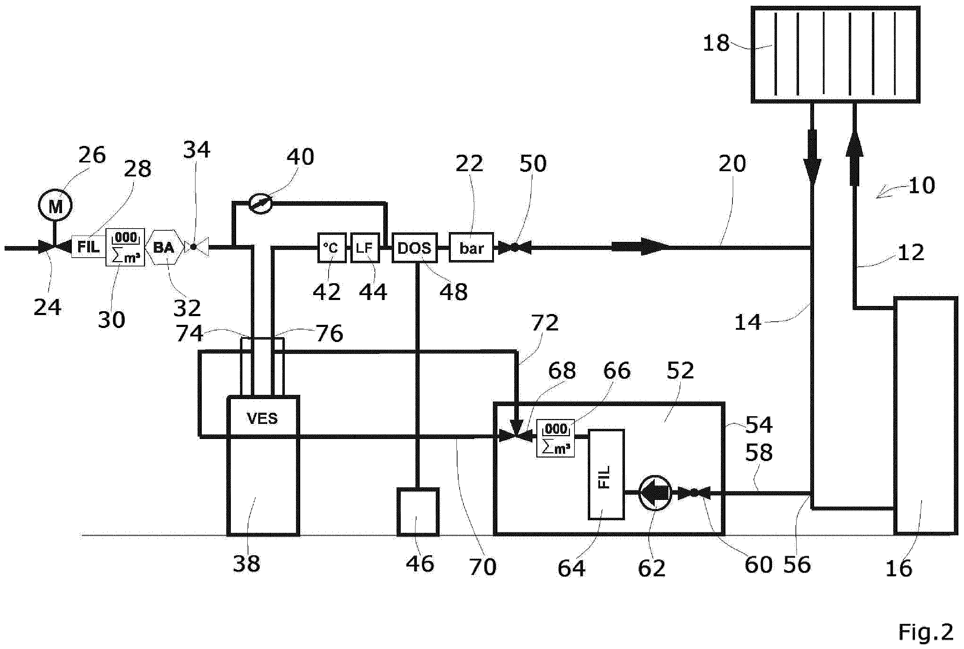

Im vorliegenden Ausführungsbeispiel wird daher eine temporäre Nachbehandlungseinrichtung lösbar installiert. Eine allgemein mit 52 bezeichnete Nachbehandlungseinheit ist in Figur 2 dargestellt.

Die Nachbehandlungseinheit 52 ist in einem Gehäuse 54 angeordnet, mit dem sie bequem zu verschiedenen Heizungsanlagen 10 transportierbar ist. Ein Anschluss 58 an der Nachbehandlungseinheit 52 kann an einen Entnahmeanschluss 56 an der Heizungsanlage 10 angeschlossen werden. Im vorliegenden Ausführungsbeispiel ist der Entnahmeanschluss 56 im Rücklauf 14 vorgesehen.

Die Eingangsseite der Nachbehandlungseinheit 52 weist eine Absperrung 60 in Form eines Kugelhahns auf. Diese ermöglicht es, ähnlich wie die Absperrung 24, den Zulauf zu unterbrechen, beispielsweise wenn das Ionentauchergranulat im Behälter 38 erschöpft ist oder nicht mehr ausreichend Chemikalien im Dosierbehälter 46 vorhanden sind. Hinter der Absperrung 60 ist eine Heizungspumpe 62 installiert. Mit der Heizungspumpe 62 wird das Wasser von der Entnahmestelle 56 wie nachstehend beschrieben zur Wasserarmaturenanordnung mit den Baugruppen 36, 38, 42, 44, 48 und 22 gepumpt. Im unbehandelten Wasser in einem bestehenden Heizkreislauf 12, 14 können sich unerwünschte Partikel befinden. Die Nachbehandlungseinheit 52 weist daher einen Filter 64 auf. Der Filter 64 schützt die Baugruppen vor verunreinigtem Wasser. Hinter dem Filter 64 ist ein Volumenstromzähler 66 angeordnet. Der Volumenstromzähler erfasst die Wassermenge des dem Heizkreislauf 12, 14 entnommenen Wassers. Fällt der Volumenstrom ab, ist dies ein Hinweis darauf, dass der Filter sich zusetzt und gereinigt, ersetzt oder rückgespült werden sollte.

Gefiltertes Wasser wird über ein Drei-Wege-Ventil 68 in die Nachfülleitung 20 geleitet. Ein erster Ausgang 70 mündet in der Nachfüllleitung bzw. in dem Strömungsweg in der fest installierten Wasserarmaturenanordnung zwischen dem Systemtrenner 32 und der Entsalzungspatrone 36. Dort wird das Wasser aus dem Heizkreislauf 12, 14 in die Nachfüllleitung eingespeist. Das Wasser wird also wie Rohwasser entsalzt oder enthärtet, mit Chemikalien versetzt und seine Temperatur, Druck und Leitfähigkeit bestimmt. Da der Druck durch die Pumpe 62 gut einstellbar ist, kann das Wasser, wie in Figur 2 dargestellt, hinter dem Druckminderer 34 eingespeist werden. Es ist aber auch möglich, das Wasser vor dem Druckminderer 34 einzuspeisen. Wichtig ist lediglich, dass das Wasser hinter dem Systemtrenner eingespeist wird, um die gesetzlichen Anforderungen weiterhin zu erfüllen und zu verhindern, dass Heizungswasser zurück in die Wasserversorgung fließt.

Der Volumenstromzähler 66 ermittelt ähnlich wie der Volumenstromzähler 30 den Volumenstrom durch die Entsalzungseinrichtung 36, 38. Die zugehörigen Signale werden an die Steuereinheit übertragen. Wenn die Nachbehandlungseinheit angeschlossen wird, wird diese auch an die Steuereinheit angeschlossen. Die Steuereinheit "kennt" bereits den Zustand des Ionentauschergranulats und addiert den weiteren Verbrauch hinzu, der sich aus dem weiteren Durchfluss und der am Leitfähigkeitssensor 44 gemessenen Leitfähigkeit ergibt. Auf diese Weise kann die Erschöpfung des Ionentauschergranulats auch dann erkannt werden, wenn die Nachbehandlungseinheit 52 angeschlossen ist. Da nun aber bereits zumindest teilweise entsalztes Wasser zugeführt wird, liegt eine andere Abhängigkeit vor. Für diesen Fall ist eine andere Kennkurve in der Steuerungseinheit hinterlegt. Mit der Nachbehandlung des im Heizkreislauf 12, 14 befindlichen Wassers werden diesem Ionen entzogen. Dies führt zu einer Absenkung der Leitfähigkeit. Wenn ein gewünschter Leitfähigkeitswert erreicht ist, ist es nicht mehr erforderlich, das Wasser durch die Entsalzungseinrichtung zu leiten.

Bei erschöpftem Ionentauschergranulat oder nach Erreichen dieses gewünschten Leitfähigkeitswertes kann das Ventil 68 zum Ausgang 72 umschalten. Dieser Ausgang mündet im Strömungsweg hinter der Entsalzungseinrichtung. Das Wasser wird also an der Entsalzungseinrichtung vorbeigeleitet. Der Bypass 72, 76 kann auch genutzt werden, wenn das Heizungswasser beispielsweise nur mit dem Filter 64 gereinigt werden soll, oder wenn lediglich Chemikalien aus dem Dosierbehälter 46 zugesetzt werden sollen.

Wenn das Heizungswasser vollständig nachbehandelt ist, hat die Leitfähigkeit einen stabilen Wert und fällt nicht weiter nach unten ab. Dann kann die Nachbehandlungseinheit 52 dauerhaft entfernt werden. Sie ist nicht mehr erforderlich. Die Anschlüsse 74 und 76 für die Nachbehandlungseinheit 52 können mit einem Stopfen verschlossen werden. Wasser, welches dem Heizkreislauf 12, 14 in der Folge zugeführt wird, wird, wie anhand von Figur 1 beschrieben, bereits beim Nachfüllen aufbereitet. Es befindet sich daher nur noch aufbereitetes Wasser im Heizkreislauf.

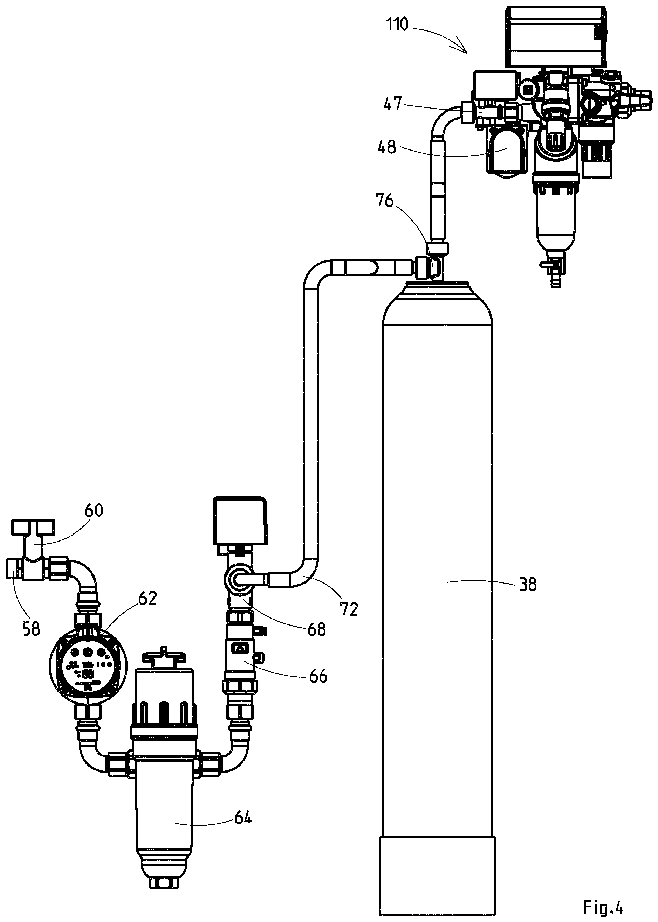

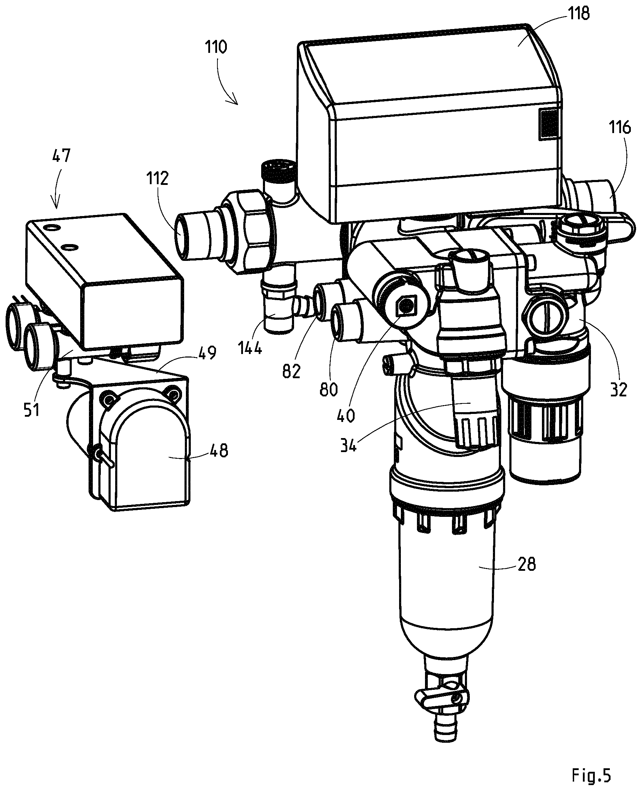

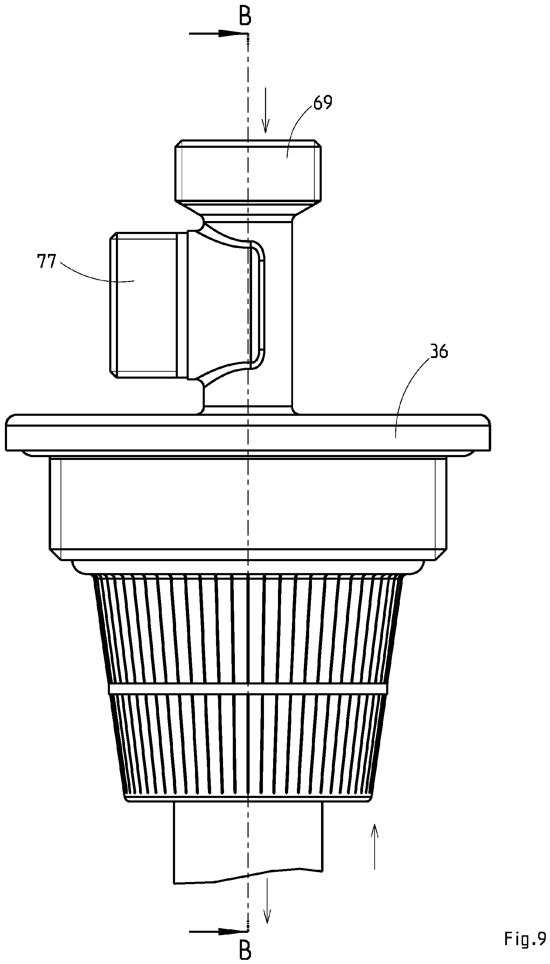

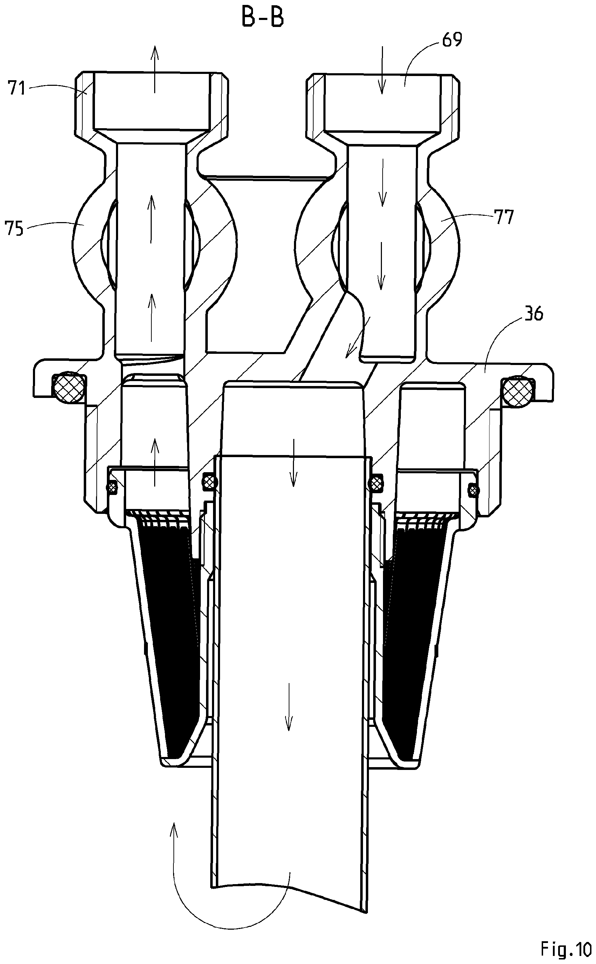

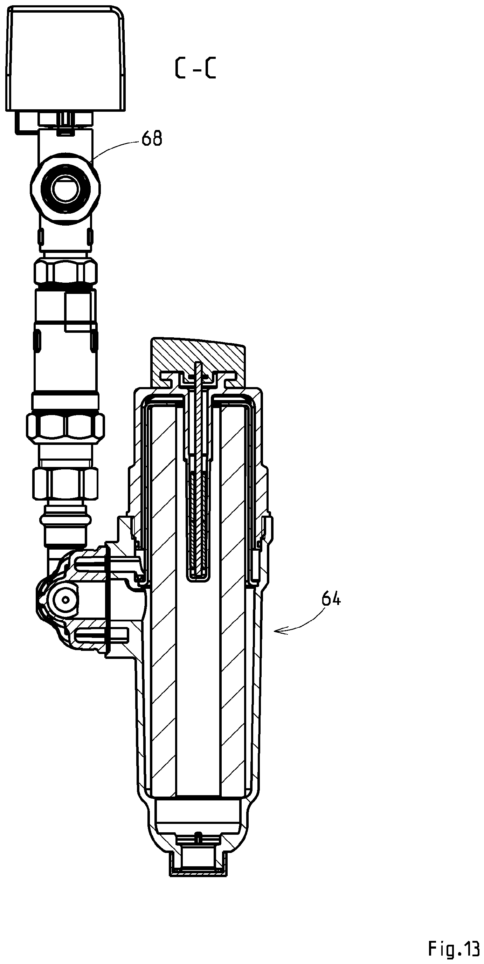

Anhand der Figuren 1 bis 17 wird nachstehend ein Ausführungsbeispiel erläutert, bei dem alle Baugruppen in einer fest installierten Wasserarmaturenanordnung vereinigt sind. Es versteht sich, dass die Baugruppen bei alternativen Ausführungsbeispielen auch in einzelnen Armaturen verwirklicht werden können und separat installiert werden können.

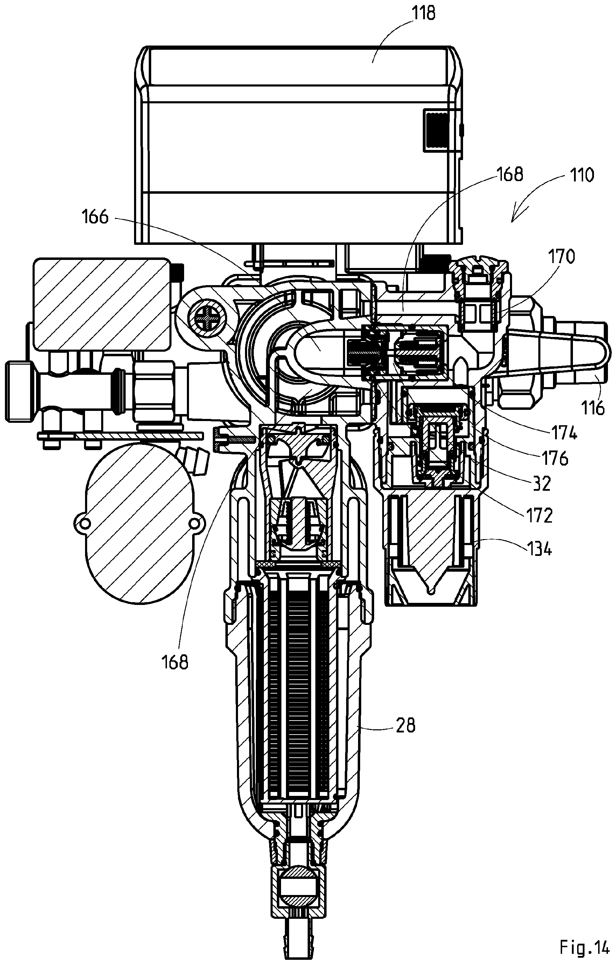

Die Figuren 14 bis 17 zeigen einen Heizungsvollautomat, der allgemein mit 110 bezeichnet ist. Der Heizungsvollautomat 110 weist eine Anschlussarmatur 114 mit einem Eingangsanschluss 112 und einem koaxialen Ausgangsanschluss 116 auf. Der Heizungsvollautomat 110 wird mit dem Eingangsanschluss 112 und dem Ausgangsanschluss 116 in der Nachfüllleitung 20 installiert, mit der aus Wasser aus einer Wasserversorgung zum Befüllen eines Heizkreislaufs 12, 14 bereitgestellt wird.

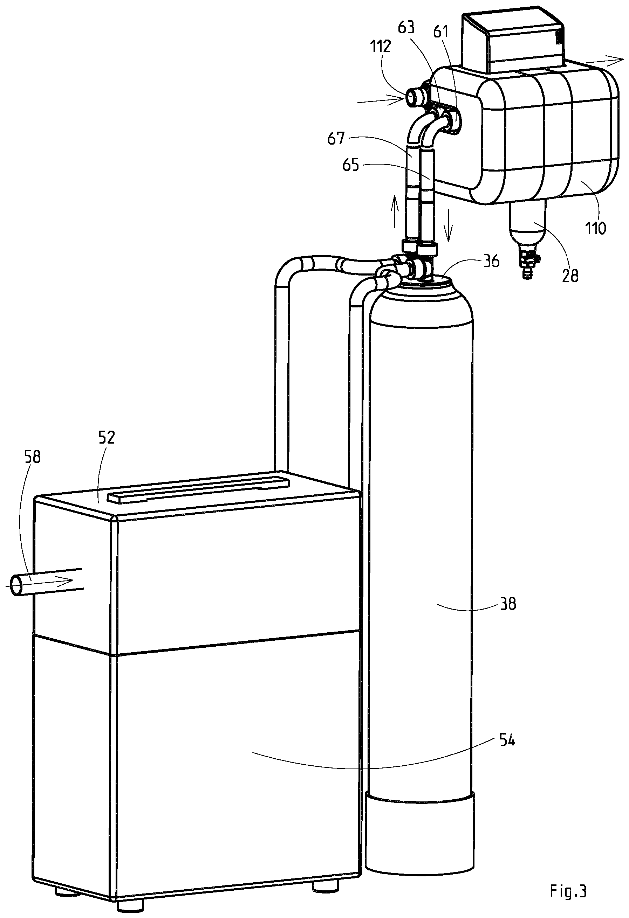

Der Heizungsvollautomat 110 weist ein Steuergerät 118 mit einer Kommunikationseinheit auf. Das Steuergerät 118 ist auf einem noch zu beschreibenden Armaturenteil 120 angeordnet, das in Figur 3 mit einer Abdeckung 122 dargestellt ist. Die Abdeckung wurde der Übersichtlichkeit halber in den übrigen Zeichnungen weggelassen.

Das Armaturenteil 120 ist mit einer Flanschverbindung 126 an die Anschlussarmatur 114 angeflanscht. Derartige Flanschverbindungen 126 sind im Armaturenbereich bekannt. Das Wasser fließt vom Eingangsanschluss 112 durch einen zentralen Kanal 128 in das Armaturenteil 120 hinein. Um den zentralen Kanal 128 ist ein Ringkanal 130 angeordnet, der mit einem Ringkanal 132 in der Anschlussarmatur 14 verbunden ist. Der Ringkanal 32 mündet im Ausgangsanschluss 116. Von dort fließt das Wasser in den Heizkreislauf 14. Derartige Flanschverbindungen sind beim Einbau sehr praktisch. Es versteht sich aber, dass auch andere bekannte Arten der Verbindung verwendet werden können. So kann beispielsweise auch eine einteilige Armatur direkt in die Rohrleitung eingebaut werden, ohne dass die Funktionsweise beeinträchtigt würde.

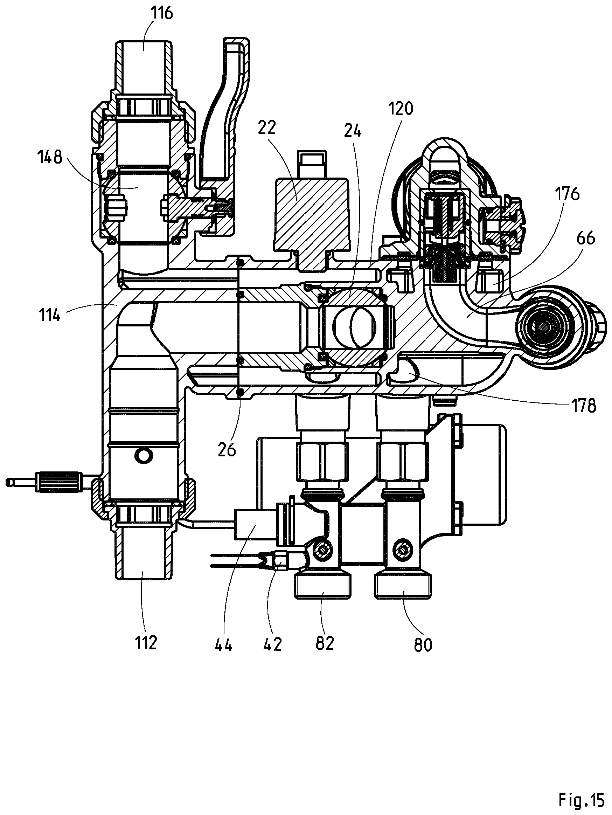

Der Heizungsvollautomat 110 weist einen Systemtrenner 32 mit Ablauftrichter 134, einen rückspülbaren Filter 28, einen Druckminderer 34 und einen Ionentauscher 36 mit Verschneideeinrichtung 40 auf. Am Eingangsanschluss 112 ist auch ein absperrbarer Ablass 144 und ein Manometeranschluss 146 zur Druckbestimmung vorgesehen. Sowohl am Ablass 144, als auch am Manometeranschluss 146 können Proben genommen werden, mit denen die Wasserqualität bestimmt werden kann. Der Ausgangsanschluss 116 ist mit einem handbetätigten Kugelhahn 148 verschließbar. Dieser bildet die Wartungsabsperrung 50 und ist in Figur 15 gut zu erkennen.

Der mit dem Eingangsanschluss 112 verbundene Zentralkanal 128 mündet in einem Kugelventil, das die Absperrung 24 bildet. Das Kugelventil 24 ist über einen Zapfen 150 mit dem Motor 26 angetrieben. Dies ist in Figur 15 gut zu erkennen. Der Motor 26 und damit die Absperrung 24 der Wasserversorgung wird von der Motorsteuerung des Steuergeräts 118 gesteuert.

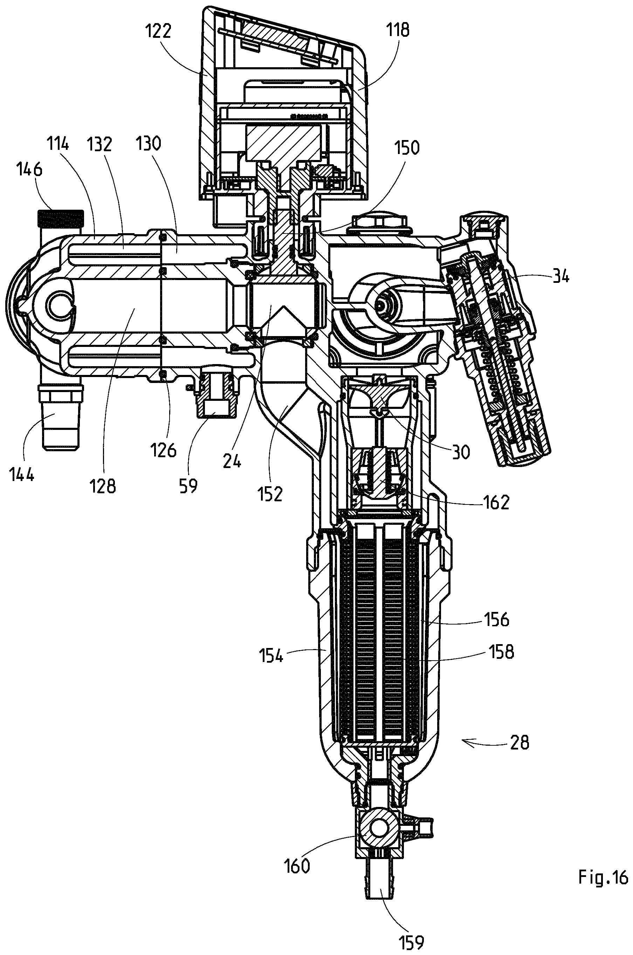

Die Kugel des Kugelventils 24 ist nach unten offen und verbindet den Zentralkanal 128 mit einem Verbindungskanal 152 zu der Filtertasse 154 des Filters 28. Dies ist in Figur 16 zu erkennen. Der Filter 28 ist ein bekannter, rückspülbarer Filter. Wasser fließt außerhalb einer Hülse 156 in der Filtertasse 154 nach unten. Von unten fließt das Wasser durch das Filtermaterial 158 im Innern der Hülse 156 nach oben. Zum Rückspülen des Filters 28 ist ein Ablauf 159 vorgesehen, der mit einem Kugelhahn 160 verschlossen ist. Wenn der Kugelhahn 160 geöffnet wird, fließt Wasser in umgekehrter Richtung durch das Filtermaterial und nimmt Schmutzpartikel mit nach außen.

Oberhalb des Filtermaterials ist ein Rückflussverhinderer 162 und ein Volumenstromzähler in Form einer Turbine 30 angeordnet. Die Turbine 30 ist mit einem Magneten versehen. Ein Reedkontakt erfasst die Turbinenbewegung und misst so die durch die Turbine 30 fließende Strömung. Die Turbine 30 hat einen Anlaufwiderstand. Geringe Strömungen werden daher über einen Bypass am Rückflussverhinderer vorbei zur Turbine 30 geleitet und strömen dort von der Seite auf die Turbinenschaufel. Auf diese Weise werden auch kleinste Strömungen erfasst. Die genaue Funktionsweise des Filters und des Strömungsmessers ist in der DE 20 2008 003 055 U1 beschrieben und braucht daher hier nicht näher erläutert werden. Die von Turbine 30 und Reedkontakt erzeugten Signale werden an die Steuerungseinheit 118 übertragen.

Das gefilterte Wasser fließt in einen Ringkanal 168, der in der Schnittdarstellung in Figur 14 gut zu erkennen ist. Im Ende des Ringkanals 168 ist ein Sieb 170 vorgesehen. Hinter dem Sieb 170 fließt das Wasser durch den Systemtrenner 32 mit einem stromaufwärtigen Rückflussverhinderer 172 und einem stromabwärtigen Rückflussverhinderer 174. Der Mitteldruckraum zwischen den Rückflussverhinderem 172 und 174 ist mit einem Ablauf mit Ablauftrichter 134 verbunden. Dieser wird von einem Kolben 176 mit vertikaler Bewegungsrichtung kontrolliert. Die Funktionsweise eines Systemtrenners mit einem solchen Kolben 176 ist in der DE 10 2012 102 701 ausführlich beschrieben und die Anmelderin vertreibt derartige Systemtrenner u.a. auf der Webseite www.syr.de.

Beim Befüllen oder Nachfüllen des Heizkreislaufs, öffnen die Rückflussverhinderer 172 und 174. Das Wasser fließt in einen gekrümmten Kanal 166. Dieser Kanal 166 ist in Figur 15 gut zu erkennen. Der Kanal 166 führt zu dem Druckminderer 34. Druckminderer sind allgemein bekannt und brauchen daher hier nicht weiter beschrieben werden. Mit dem Druckminderer 34 wird der Druck beim Befüllen des Heizkreislaufs auf einen konstanten Wert geregelt.

Nachdem das Wasser durch das Ventil im Druckminderer 34 geflossen ist, fließt es in einen Hohlraum 176. Das ist in Figur 15 zu erkennen. Der Hohlraum 176 ist mit einem Verbindungskanal 178 verbunden, der in Figur 15 zu erkennen ist. Der Verbindungskanal 178 führt durch eine Öffnung 84 in die Zuleitung 80 zum Ionentauscher 38. Der Rücklauf aus dem Ionentauscher 38 erfolgt über eine Leitung 82 in das Armaturenteil 20.

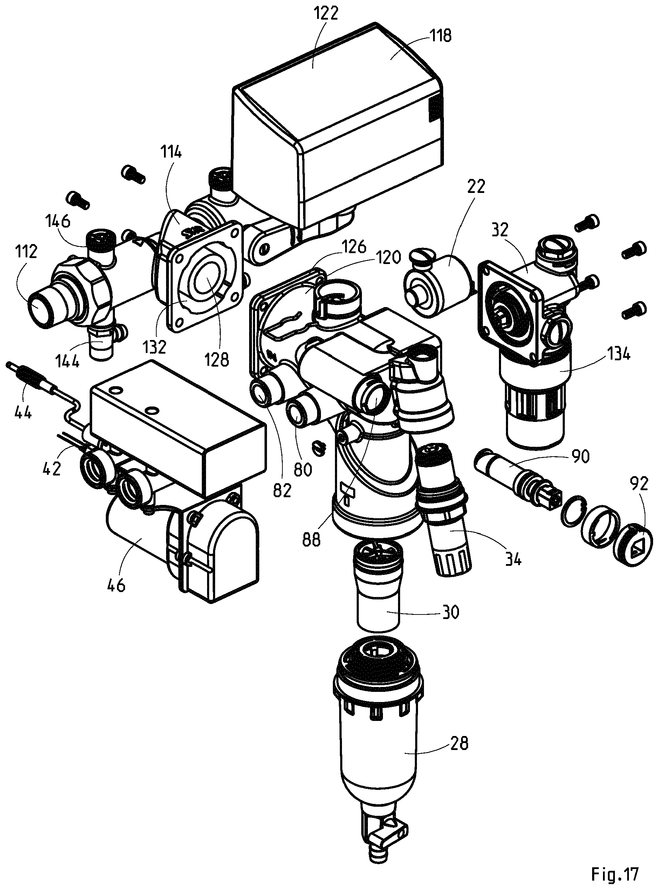

Die Zuleitung 80 und die zurückführende Leitung 82 sind durch die Verschneideeinrichtung 40 geführt. Das Gehäuse 120 bildet hierzu eine zylindrische, horizontale Bohrung 88. Diese ist in Figur 17 gut zu erkennen. Die Bohrung 88 ist durch einen Hohlraum bis zur Zuleitung 82 geführt. In der Bohrung 88 ist ein Kolben 90 axialbeweglich geführt. Durch Bewegung des Kolbens 90 kann die Öffnungsfläche des Hohlraums zur Leitung 80 eingestellt werden. Hierzu ist ein Stellgriff 92 an dem Kolben 90 vorgesehen. Es kann somit eingestellt werden, wieviel unbehandeltes Rohwasser unbehandelt vom Druckminderer durch den Durchbruch gelassen wird. Das Rohrwasser fließt dosiert aus der Bohrung 88 durch einen gekrümmten Kanal in den Ringkanal 130 und von dort zum Ausgangsanschluss 116. Die Bohrung, in der die Leitung 82 für das enthärtete Wasser mündet, liegt ebenfalls im Ringkanal 130. Dort wird das Rohwasser mit dem enthärteten Wasser gemischt. Vom Ausgangsanschluss 116 fließt das behandelte Wasser zum Vorlauf 14 des Heizkreislaufs.

Das Wasser fließt von der Leitung 80 durch eine allgemein mit 47 bezeichnete Messarmatur. An der Messarmatur 47 ist auch die Dosierpumpe 48 befestigt. Hierzu ist die Dosierpumpe an einem Winkel 49 befestigt, der an einem Armaturenteil 51 der Messarmatur befestigt ist. Eine Steuerung 53 ist oberhalb des Armaturenteils 51 angeordnet. Mit der Steuerung 53 wird die Dosierpumpe 48 gesteuert. Die Steuerung 53 ist mit Signalen der Steuerung 118, insbesondere zum Volumenstrom durch die Wasserarmatur, beaufschlagt und umgekehrt. Chemikalien aus dem Dosierbehälter 46 werden mit der Dosierpumpe 48 über einen Schlauch zu einem Anschluss 59 im Armaturenteil 120 gepumpt. Der Anschluss 59 mündet im Ringkanal 130. Die Chemikalien werden wie in der schematischen Darstellung in Figur 1 und 2 gezeigt also in die Wasserarmaturenanordnung hinter den übrigen Baugruppen zugeführt.

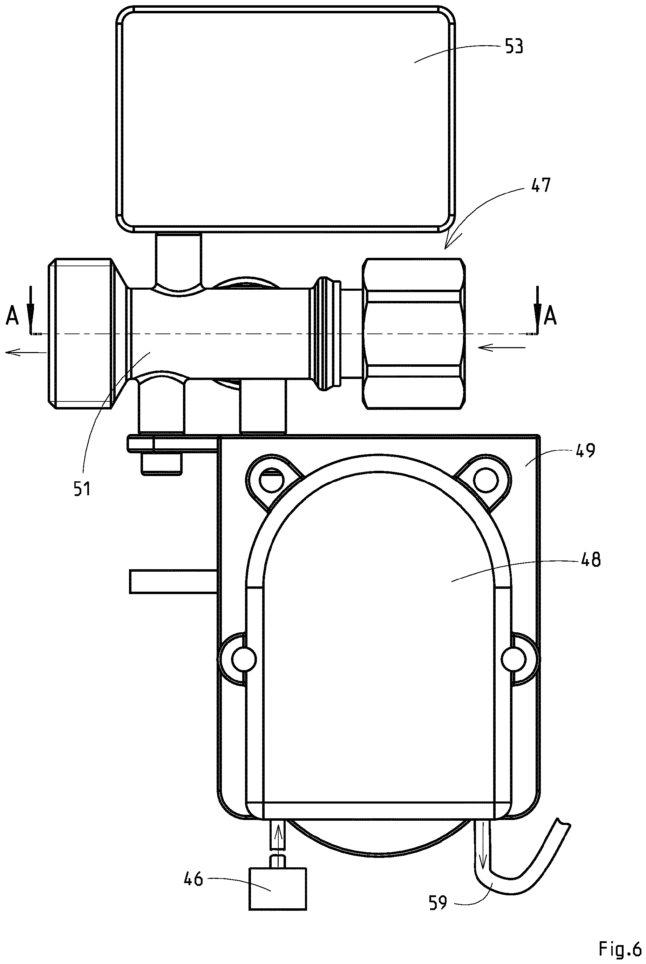

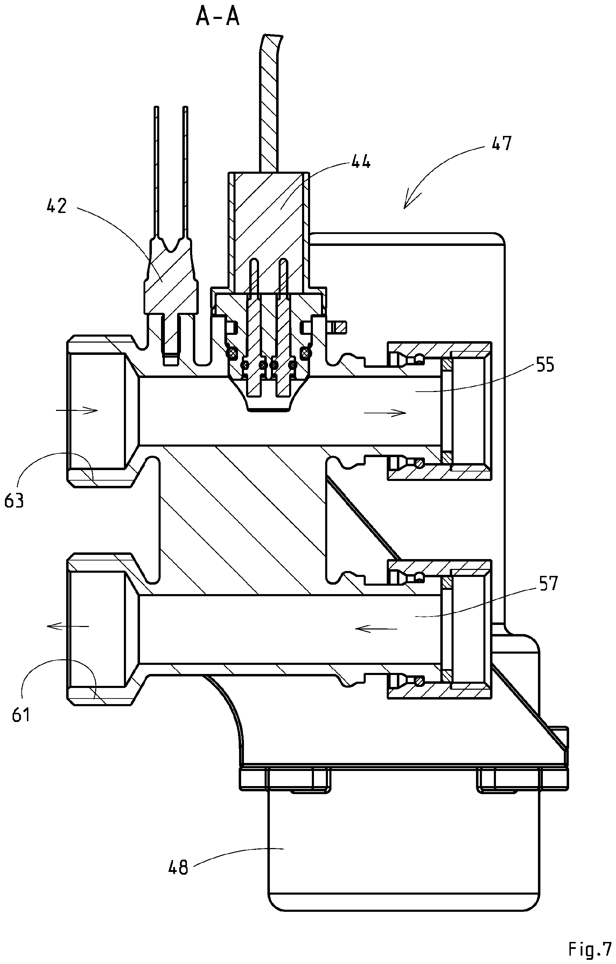

Die Messarmatur 47 ist in Figur 6 und 7 im Detail dargestellt. Die Messarmatur hat zwei Durchgangskanäle 55 und 57. Der erste Durchgangskanal 57 ist mit der Leitung 80 verbunden. Dort fließt unbehandeltes Wasser - von links nach rechts in Figur 6 und von rechts nach links in Figur 7 - hinein. Der zweite Durchgangskanal 55 ist mit der Leitung 82 verbunden. In diesem Kanal 55 wird mit dem Temperatursensor 42 die Temperatur gemessen. Hinter dem Temperatursensor 42 ist der Leitfähigkeitssensor 44 in dem Kanal 55 angeordnet. Mit einem Leitfähigkeitssensor 44 wird die Leitfähigkeit des teilenthärteten Wassers ermittelt. Dieser Wert repräsentiert den Kalkgehalt des Wassers. Bei Erschöpfung des Ionentauschers steigt die Leitfähigkeit. Dies ist also ein Indiz, dass der Ionentauscher gewartet werden muss. Entsprechend kann eine Meldung erzeugt und übertragen werden.

Die Messarmatur 47 bildet am Ende der Durchgangskanäle 55 und 57 zwei Stutzen 61 und 63. Der Durchgangskanal 57 mündet im Stutzen 61. Von diesem führt ein Schlauch oder eine Leitung 65 zu einem Eingang 69 an einem Behälterkopf 36 des Behälters 38 mit Ionentauschermittel. Das durch den Behälter 38 geleitete Wasser tritt am Ausgang 71 am Behälterkopf 36 aus dem Behälter 38 aus. Das Wasser wird anschließend über einen Schlauch oder eine Leitung 67 zurück zum Stutzen 63 geführt. Dort fließt es durch den Durchgangskanal 55 mit den Sensoren 42 und 44 und zur Leitung 82 in der Wasserarmatur. Dieser Strömungsgang entspricht dem Strömungsgang aus der schematischen Darstellung in Figur 1 für das Befüllen und Nachfüllen eines Heizkreislaufs 12, 14.

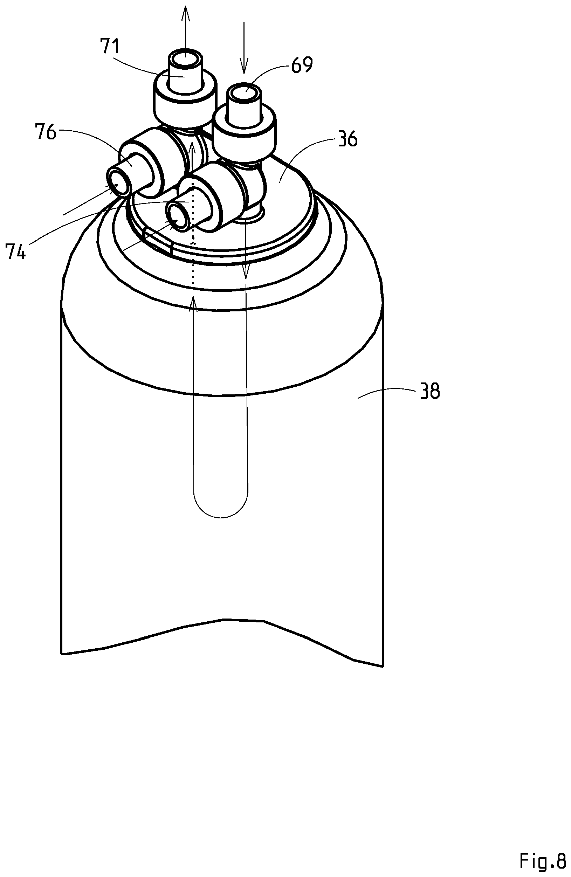

Der Behälterkopf 36 ist in den Figuren 8 bis 10 im Detail dargestellt. Dort sind die weiteren Anschlüsse 74 und 76 zu erkennen. Anschluss 74 ist ein Eingang, der seitlich am Anschluss 69 mündet. An ihm wird Wasser aus dem Heizkreislauf 14 vom Ausgang 70 der Nachbehandlungseinheit 52 durch den Behälter 38 mit dem Ionentauscher geleitet. Anschluss 76 ist ein Eingang, der seitlich am Anschluss 71 mündet. An ihm wird Wasser aus dem Heizkreislauf 14 vom Ausgang 72 der Nachbehandlung 52 am Behälter 38 vorbei zur Wasserarmaturenanordnung 110 geleitet.

Die Anschlüsse 74 und 74 sind im vorliegenden Ausführungsbeispiel so gewählt, dass die Wasserarmaturenanordnung 110 gegenüber bekannten Wasserarmaturen nicht verändert werden muss. Die Zuschaltung einer Nachbehandlungseinrichtung 52 erfordert also lediglich einen anderen Behälterkopf 36. Dieser ist kostengünstig herstellbar und die Anschlüsse 74 und 76 können mit einem einfachen Stopfen verschlossen werden, wenn sie nicht mehr gebraucht werden. Die Anlage erfordert folglich nur einen Behälter mit Ionentauscher und muss gegenüber bekannten Anlagen nur geringfügig geändert werden.

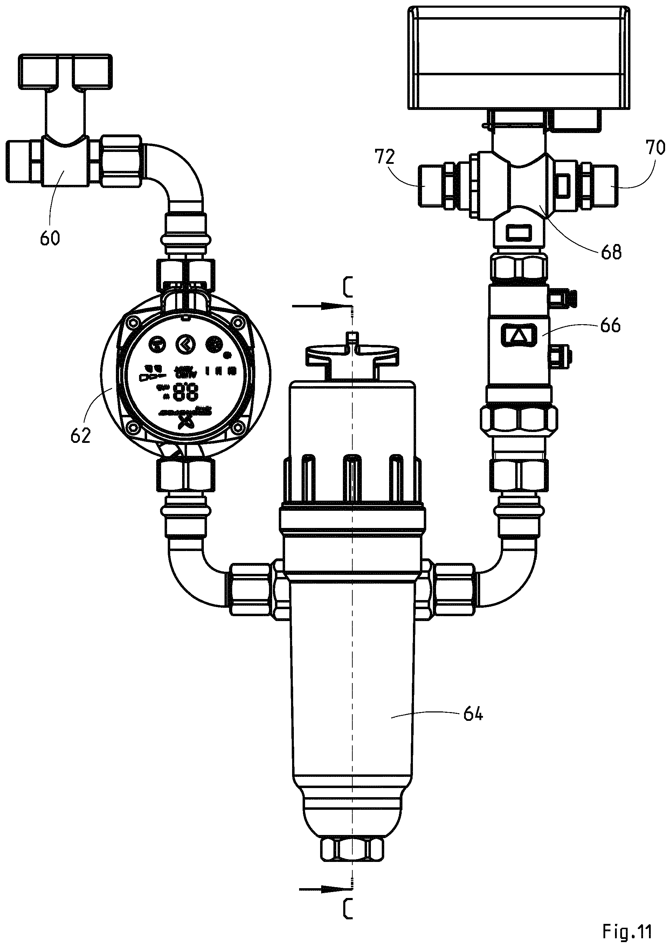

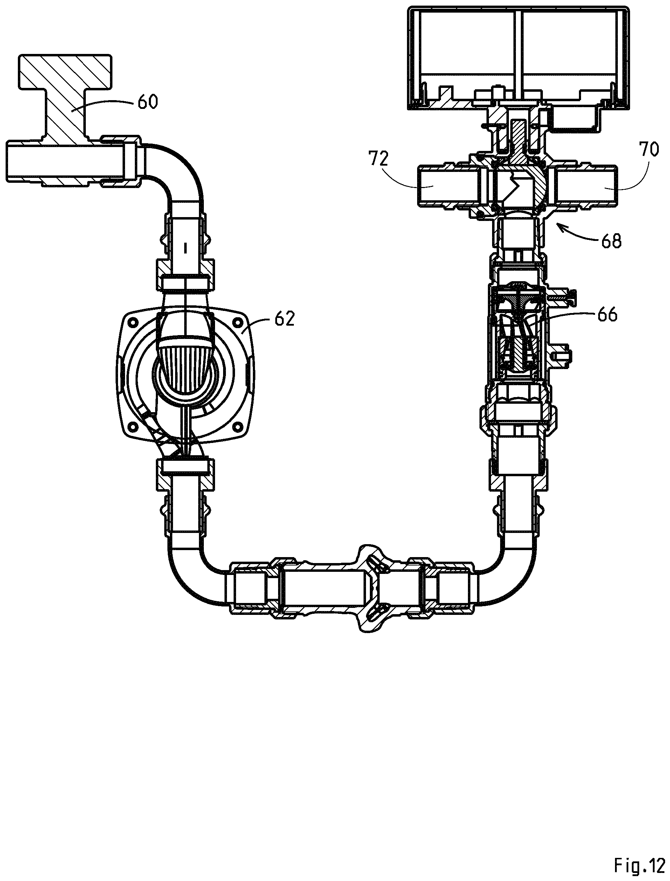

In den Figuren 11 bis 13 ist ein Ausführungsbeispiel für die Nachbehandlungseinrichtung 52 dargestellt. Das Wasser fließt beispielsweise vom Vorlauf 14 des Heizkreislaufs von links in Figur 11 und 12 in die Nachbehandlungseinrichtung 12. Dort ist zunächst die Wartungsabsperrung 60 angeordnet. Hinter der Wartungsabsperrung ist die Pumpe 62 angeordnet. Figur 11 zeigt ein Ausführungsbeispiel, in dem hinter der Pumpe 62 ein Filter 64 angeordnet ist. Die Figur 12 zeigt ein alternatives Ausführungsbeispiel ohne Filter. Der Filter 64 ist ein Wickelfilter mit einer Magnetlanze, der im vorliegenden Ausführungsbeispiel über eine Flanschverbindung in der Rohrleitung installierte Anschlussarmatur angeflanscht ist. Die Rohrleitung ist innerhalb der Nachbehandlungseinrichtung 12 im Wesentlichen U-förmig, wobei der Filter 64 im unteren Bereich angeordnet ist. Weiter stromabwärts ist der Volumenstromzähler 66 mit einer Turbine und einem Reedkontakt angeordnet. Darüber sitzt am ausgangsseitigen Ende ein Drei-Wege-Ventil 68. Das Ventil 68 ist ein nach unten offenes Kugelventil. Von unten kommendes Wasser wird durch das Ventil 68 entweder zum Ausgang 70 oder zum Ausgang 72 geleitet. Das Ventil 68 ist mit einem Motor mit einer Motorsteuerung versehen. Die Kugel des Ventils 68 öffnet zum Ausgang 70, wenn das Wasser durch den Behälter 38 mit dem Ionentauscher geleitet werden soll. Wenn das Wasser vollständig behandelt ist und sich die Leitfähigkeit nicht mehr verändert, wird das Wasser am Behälter 38 vorbeigeleitet indem die Kugel des Ventils 68 gedreht wird, bis sie zum Ausgang 72 öffnet.

Ein Drucksensor 22 misst den Ausgangsdruck und überträgt das Signal an das Steuergerät 118.

Mit der beschriebenen Anordnung werden alle Vorteile der Heizungsbefüllung, wie sie ein Heizungsvollautomat der Anmelderin aufweist und im Stand der Technik beschrieben sind, auch bei der Nachbehandlungseinrichtung genutzt. Die Nachbehandlungseinrichtung 52 kann insbesondere mobil ausgebildet sein. Da sie erheblich weniger Komponenten erfordert, ist sie kleiner, leichter, weniger anfällig und kostengünstig. Der Voluminöse Behälter für Ionentauscher, die Dosiereinrichtung und einige der Messgeräte der Armatur 110 können auch von der Nachbehandlungseinrichtung genutzt werden.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Wasserarmaturenanordnung, enthaltend
(a) ein Armaturengehäuse mit einem Eingangsanschluss für Rohwasser;
(b) Baugruppen (38, 48) zum Aufbereiten von Wasser für den Heizkreislauf; und
(c) einen Ausgangsanschluss für aufbereitetes Wasser zur festen Installation zwischen einer Rohwasserversorgung und dem Einlassanschluss eines Heizkreislaufs;
**gekennzeichnet durch**
(d) einen stromaufwärts zu den Baugruppen zur Aufbereitung von Wasser angeordneten Zusatzanschluss zum lösbaren Anschließen einer temporären Nachbehandlungseinheit mit einer Absperrung und einer Pumpe zum Umleiten von Heizungswasser aus dem Heizkreislauf durch die temporäre Nachbehandlungseinheit in die Wasserarmatur, so dass die Aufbereitung des Heizungswassers zumindest teilweise durch die Baugruppen für die Aufbereitung von Wasser in der fest installierbaren Wasserarmaturenanordnung erfolgt; wobei
(e) der Ausgangsanschluss einen gemeinsamen Ausgang bildet, aus dem bei angeschlossener Nachbehandlungseinheit (52) sowohl aufbereitetes Rohwasser als auch aufbereitetes Heizungswasser austritt.

2. Wasserarmaturenanordnung nach Anspruch 1, **dadurch gekennzeichnet, dass** ein Systemtrenner (32) in das Armaturengehäuse integriert ist und der Zusatzanschluss von einem Stutzen des Armaturengehäuses gebildet ist, der stromabwärtig zu dem Systemtrenner und stromaufwärtig zu den Baugruppen zur Aufbereitung von Wasser angeordnet ist.

3. Wasserarmaturenanordnung nach einem der vorgehenden Ansprüche, **dadurch gekennzeichnet, dass** eine oder mehrere Baugruppen für die Aufbereitung von Wasser in der Wasserarmaturenanordnung ausgewählt sind aus der Gruppe: Wasserfilter (28), Druckminderer (34), Dosiereinrichtung zur Dosierung von Chemikalien (48), Entsalzungseinrichtungen (38), Enthärtungseinrichtungen und Bestrahlungseinrichtungen.

4. Wasserarmaturenanordnung nach einem der vorgehenden Ansprüche, **dadurch gekennzeichnet, dass** ein Temperaturmessgerät (42), ein Leitfähigkeitsmessgerät (44), ein Volumenstrom-Messgerät (30), ein Druckmessgerät (22) und/oder andere Messgeräte (44) zur Erfassung des Grads der Aufbereitung des Wassers vorgesehen sind.

5. Armaturenanordnung nach einem der vorgehenden Ansprüche, **dadurch gekennzeichnet, dass** die Nachbehandlungseinheit (66) ein Messgerät (66) zur Messung des Volumenstroms durch die Nachbehandlungseinheit aufweist.

6. Armaturenanordnung nach einem der vorgehenden Ansprüche, **dadurch gekennzeichnet, dass** die Nachbehandlungseinheit einen Wasserfilter (64) aufweist.

7. Wasserarmaturenanordnung nach einem der vorgehenden Ansprüche, **gekennzeichnet durch** eine Ionentauschereinrichtung (38) mit einem Ionentauschergranulat in einem Behälter, wobei der Behälter lösbar an die übrigen Teile der Wasserarmaturenanordnung anschließbar ist, und der Zusatzanschluss (74) so am Behälter vorgesehen ist, dass das Heizungswasser von der lösbaren Nachbehandlungseinheit zunächst durch den Behälter und anschließend in den übrigen Teil der Wasserarmaturenanordnung fließt.

8. Wasserarmaturenanordnung nach Anspruch 5, **dadurch gekennzeichnet, dass** eine Einrichtung (38) zur Entsalzung oder Enthärtung mit einem Ionentauschergranulat in einem separaten Behälter umfasst ist, wobei der Behälter über einen Behälterkopf und Zuleitungen oder Schläuche mit dem übrigen Teil der fest installierbaren Wasserarmaturenanordnung verbunden ist und der Zusatzanschluss an dem Behälterkopf vorgesehen ist.

9. Wasserarmaturenanordnung nach einem der vorgehenden Ansprüche, **dadurch gekennzeichnet, dass** eine Entsalzungs- oder Enthärtungseinrichtung vorgesehen ist und eine Verschneideeinrichtung (40), mit welcher Rohwasser dem in der Entsalzungs- oder Enthärtungseinrichtung behandelten Wasser zuführbar ist.

10. Wasserarmaturenanordnung nach einem der vorgehenden Ansprüche 2 bis 9, **dadurch gekennzeichnet, dass** eine motorgesteuerte Absperrung (24, 26) stromaufwärts zum Systemtrenner angeordnet ist, und Mittel zur Erfassung des Drucks in der Heizungsanlage, so dass die Absperrung nach Maßgabe des erfassten Drucks betätigbar ist.

11. Wasserarmaturenanordnung nach einem der vorgehenden Ansprüche, **dadurch gekennzeichnet, dass** ein Leitfähigkeitssensor (44) in der Strömung stromabwärts zu einer Baugruppe für die Wasserbehandlung vorgesehen ist, dessen Signale an ein Steuergerät übertragen werden.

12. Wasserarmaturenanordnung nach einem der vorgehenden Ansprüche, **dadurch gekennzeichnet, dass** ein Steuergerät zur Steuerung einer oder mehrerer Baugruppen für die Aufbereitung von Wasser für Heizungsanlagen und/oder zur Steuerung einer Absperrung und/oder Anzeige des Erschöpfungsgrads von Wasserbehandlungseinrichtungen vorgesehen ist.

## Claims

1. Water fitting assembly, comprising
(a) a fitting housing with an inlet connector for raw water;
(b) modules (38, 48) for treating water for a heating circuit; and
(c) an outlet connector for treated water for fixed installation between a raw water supply and the inlet connector of a heating circuit;
**characterized by**
(d) an additional connector arranged upstream of the modules for treating water for releasably connecting a temporary after-treatment unit having a shut-off valve and a pump for bypassing heating water from the heating circuit through the temporary after-treatment in the water fitting whereby the treatment of the heating water is effected at least partly by the modules for the treatment of water in the fixedly installed water fitting assembly; wherein
(e) the outlet connector forms a common exit where treated raw water as well as treated heating water exits when the after-treatment unit (52) is connected.

2. Water fitting assembly according to claim 1, **characterized in that** a system disconnector (32) is integrated in the fitting housing and the additional connector is formed by a socket of the fitting housing which is arranged downstream of the system disconnector and upstream of the modules for treating water.

3. Water fitting assembly according to any of the preceding claims, **characterized in that** one or more modules for the treatment of water in the water fitting assembly is selected from the group: water filter (28), pressure reducer (34), dosing unit for dosing chemicals (48), desalination units(38), descaling units and irradiation devices.

4. Water fitting assembly according to any of the preceding claims, **characterized in that** a temperature measuring device (42), a conductivity measuring device (44), a volume flow measuring device (30), a pressure measuring device (22) and/or other measuring devices (44) for detecting the degree of treatment of the water are provided.

5. Water fitting assembly according to any of the preceding claims, **characterized in that** the after-treatment unit (66) is provided with a measuring device (66) for measuring the volume flow through the after-treatment unit.

6. Water fitting assembly according to any of the preceding claims, **characterized in that** the after-treatment unit is provided with a water filter (64).

7. Water fitting assembly according to any of the preceding claims, **characterized in that** an ion-exchanger unit (38) with an ion exchange granulate in a container can be connected, wherein the container is adapted to be releasably connected to the other parts of the water fitting assembly, and the additional connector (74) is provided at the container in such a way that the heating water first flows from the releasably after-treatment unit through the container and afterwards in the remaining parts of the water fitting assembly.

8. Water fitting assembly according to claim 5, **characterized in that** a unit (38) for desalination or descaling is comprised with a ion exchanger granulate in a separate container, wherein the container is connected to the remaining parts of the fixedly installed water fitting assembly through a container head and pipes or tubes and the additional connector is provided at the container head.

9. Water fitting assembly according to any of the preceding claims, **characterized in that** a desalination- or descaling unit is provided and a blending device (40) for blending raw water with water treated in the desalination- or descaling unit.

10. Water fitting assembly according to any of the preceding claims 2 to 9, **characterized in that** a motor-driven shut-off valve (24, 26) is provided upstream of the system disconnector, and means are provided for detecting the pressure in the heating assembly whereby the shut-off valve is adapted to be operated according to the detected pressure.

11. Water fitting assembly according to any of the preceding claims, **characterized in that** a conductivity sensor (44) is provided in the flow downstream of a module for water treatment the signals of which being transferred to a control device.

12. Water fitting assembly according to any of the preceding claims, **characterized in that** a control device is provided for controlling one or more modules for treating water for heating assemblies and/or for controlling a shut-off valve and/or displaying the degree of exhaustion of water treatment units.

## Revendications

1. Disposition de pièce de robinetterie d'eau, comprenant :
(a) un boîtier de pièce de robinetterie muni d'un raccord d'entrée pour eau brute ;
(b) des sous-groupes (38, 48) pour le traitement de l'eau destinée au circuit de chauffage ; et
(c) un raccord de sortie pour l'eau traitée destiné à être installé fixement entre le dispositif d'alimentation en eau brute et le raccord d'entrée d'un circuit de chauffage ;
**caractérisée par**
(d) un raccord supplémentaire disposé en amont des sous-groupes pour le traitement de l'eau et destiné à raccorder de manière amovible une unité de retraitement temporaire présentant un dispositif de fermeture et une pompe pour le réacheminement de l'eau de chauffage provenant du circuit de chauffage par l'unité de retraitement temporaire à l'intérieur de la pièce de robinetterie d'eau de sorte que le traitement de l'eau de chauffage est effectué au moins partiellement par les sous-groupes pour le traitement de l'eau dans la disposition de pièce de robinetterie d'eau pouvant être installée fixement ;
(e) le raccord de sortie formant une sortie commune de laquelle s'écoule aussi bien de l'eau brute traitée que de l'eau de chauffage traitée lorsque l'unité de retraitement (52) est raccordée.

2. Disposition de pièce de robinetterie d'eau selon la revendication 1, **caractérisée en ce qu'**un disconnecteur de système (32) est intégré dans le boîtier de pièce de robinetterie et le raccord supplémentaire est formé par un embout du boîtier de pièce de robinetterie qui est disposé en aval du disconnecteur de système et en amont des sous-groupes pour le traitement de l'eau.

3. Disposition de pièce de robinetterie d'eau selon l'une quelconque des revendications précédentes, **caractérisée en ce qu'**un ou plusieurs sous-groupes pour le traitement de l'eau dans la disposition de pièce de robinetterie d'eau sont sélectionnés parmi le groupe des : filtres à eau (28) réducteurs de pression (34), dispositifs de dosage destinés à doser les substances chimiques (48), installations de dessalement (38), adoucisseurs d'eau et installations d'irradiation.

4. Disposition de pièce de robinetterie d'eau selon l'une quelconque des revendications précédentes, **caractérisée en ce qu'**il est prévu un instrument de mesure de la température (42), un instrument de mesure de la conductivité (44), un instrument de mesure du débit volumique (30), un instrument de mesure de la pression (22) et/ou tout autre instrument de mesure (44) destiné à détecter le niveau de traitement de l'eau.

5. Disposition de pièce de robinetterie d'eau selon l'une quelconque des revendications précédentes, **caractérisée en ce que** l'unité de retraitement (66) présente un instrument de mesure (66) destiné à mesurer le débit volumique traversant l'unité de retraitement.

6. Disposition de pièce de robinetterie d'eau selon l'une quelconque des revendications précédentes, **caractérisée en ce que** l'unité de retraitement présente un filtre à eau (64).

7. Disposition de pièce de robinetterie d'eau selon l'une quelconque des revendications précédentes, **caractérisée par** un échangeur d'ions (38) comportant des granulés échangeurs d'ions dans un réservoir, le réservoir pouvant être raccordé de manière amovible aux éléments restants de la disposition de pièce de robinetterie d'eau, et le raccord supplémentaire (74) étant prévu sur le réservoir de sorte que l'eau de chauffage de l'unité de retraitement amovible traverse d'abord le réservoir pour arriver finalement dans l'élément restant de la disposition de pièce de robinetterie d'eau.

8. Disposition de pièce de robinetterie d'eau selon la revendication 5, **caractérisée en ce qu'**une installation (38) de dessalement ou d'adoucissement à l'aide de granulés échangeurs d'ions est comprise dans un réservoir séparé, le réservoir étant relié par le biais d'une tête de réservoir et de conduites d'alimentation ou de tuyaux flexibles à l'élément restant de la disposition de pièce de robinetterie d'eau pouvant être installée fixement et le raccord supplémentaire étant prévu sur la tête de réservoir.

9. Disposition de pièce de robinetterie d'eau selon l'une quelconque des revendications précédentes, **caractérisée en ce qu'**il est prévu une installation de dessalement ou d'adoucissement et une installation de coupage (40) permettant d'amener de l'eau brute à l'eau traitée dans l'installation de dessalement ou d'adoucissement.

10. Disposition de pièce de robinetterie d'eau selon l'une quelconque des revendications précédentes 2 à 9, **caractérisée en ce qu'**un dispositif de fermeture actionné par moteur (24, 26) est disposé en amont du disconnecteur de système et des moyens de détection de la pression sont disposés dans l'installation de chauffage de sorte que le dispositif de fermeture peut être actionné en fonction de la pression détectée.

11. Disposition de pièce de robinetterie d'eau selon l'une quelconque des revendications précédentes, **caractérisée en ce qu'**il est prévu un capteur de conductivité (44) dans le courant en aval de l'un des sous-groupes pour le traitement de l'eau dont les signaux sont transmis à un appareil de commande.

12. Disposition de pièce de robinetterie d'eau selon l'une quelconque des revendications précédentes, **caractérisée en ce qu'il** est prévu un appareil de commande pour commander un ou plusieurs sous-groupes pour le traitement de l'eau destinée à des installations de chauffage et/ou pour commander un dispositif de fermeture et/ou pour afficher le niveau d'épuisement d'installations de traitement de l'eau.
